# EUROPEAN PATENT SPECIFICATION

(11) **EP 1 524 301 B1**
(45) Date of publication and mention of the grant of the patent: **16.05.2007**
(21) Application number: 03760889.0
(22) Date of filing: 19.06.2003
(51) Int. Cl.: C08L 101/00, C08L 63/00, C08L 33/06, C08K 3/40

(54) **TRANSPARENT COMPOSITE COMPOSITION**
TRANSPARENTE VERBUNDZUSAMMENSETZUNG
COMPOSITION DE COMPOSITE TRANSPARENT

(30) Priority: 20.06.2002 JP 2002179264; 06.12.2002 JP 2002354561
(43) Date of publication of application: 20.04.2005
(73) Proprietor: SUMITOMO BAKELITE CO., LTD., Tokyo 140-0002 (JP)
(72) Inventor: SHIBAHARA, Sumio Sumitomo Bakelite Company, Ltd., Shinagawa-ku, Tokyo 104-0002 (JP); OKA, Wataru Sumitomo Bakelite Company, Ltd., Shinagawa-ku, Tokyo 104-0002 (JP); SHIMOBE, Yasuo Sumitomo Bakelite Company, Ltd., Shinagawa-ku, Tokyo 104-0002 (JP); KURAMOTO, Hiromitsu Sumitomo Bakelite Company, Ltd, Shinagawa-ku, Tokyo 104-0002 (JP); NAKAO, Toshio Sumitomo Bakelite Company, Ltd., Shinagawa-ku, Tokyo 104-0002 (JP)
(74) Representative: Schnappauf, Georg
(86) International application number: PCT/JP2003/007763
(87) International publication number: WO 2004/000945

(56) References cited:
- WO-A-96/30203
- GB-A- 1 474 013
- JP-A- 5 093 087
- JP-A- 2001 261 933
- JP-A- 2002 080 698
- JP-A- 2002 105 291
- JP-A- 2002 234 990
- JP-A- 2002 302 533
- JP-A- 2003 003 043
- JP-A- 2003 155 355
- JP-A- 2003 155 415
- JP-A- 2003 183 414
- US-A- 4 622 184
- US-A- 5 783 624
- PATENT ABSTRACTS OF JAPAN vol. 016, no. 584 (C-1013), 24 December 1992 (1992-12-24) & JP 04 236217 A (SHIN ETSU CHEM CO LTD), 25 August 1992 (1992-08-25)
- PATENT ABSTRACTS OF JAPAN vol. 2002, no. 03, 3 April 2002 (2002-04-03) & JP 2001 323135 A (SUMITOMO BAKELITE CO LTD), 20 November 2001 (2001-11-20)
- PATENT ABSTRACTS OF JAPAN vol. 2002, no. 05, 3 May 2002 (2002-05-03) & JP 2002 012743 A (SUMITOMO BAKELITE CO LTD), 15 January 2002 (2002-01-15)
- PATENT ABSTRACTS OF JAPAN vol. 2000, no. 26, 1 July 2002 (2002-07-01) & JP 2001 261367 A (NGK INSULATORS LTD; NGK FRIT CO LTD), 26 September 2001 (2001-09-26)

## Description

### TECHNICAL FIELD

The present invention relates to a composite composition excellent in transparency. The transparent composite composition of the invention is suited for use in producing, for example, transparent sheets, optical lenses, liquid crystal display element plastic substrates, color filter substrates, organic EL display element plastic substrates, solar cell substrates, touch panels, optical elements, optical waveguides, LED sealants, and the like.

### BACKGROUND ART

Attempts have been made to improve the rigidity, strength, thermal expansion coefficient, dimension stability, water absorbency and other various characteristics of resins by adding thereto various fillers, such as glass fibers and inorganic particles. However, the transparency of composites resulting from addition of a filler, such as a glass fiber or inorganic particles, to resins is inferior in most cases. If a composite retaining the good transparency of the corresponding resin can be obtained, it might be expected that the composite be useful in a very wide range, for example in the optical field.

The fact that the transparency of a composite comprising a transparent resin and a transparent filler is inferior is presumably due to the difference in refractive index between the filler and resin, which causes diffuse reflection of the light penetrating the resin.

Various attempts have been made to obtain transparent composites by adjusting the refractive indices of resins and fillers. Thus, for example, JP Kokai (Laid-open Japanese Patent Application) H06-256604 and JP Kokai H06-305077 give, by way of illustration, transparent composites which comprise a cycloolefin resin and a glass fiber and in which the difference in refractive index therebetween is in a specified range. Further, JP Kokai H04-236217 describes, as an example, a light-transmitting epoxy resin composition comprising an acid anhydride-cured epoxy resin and a filler substantially the same in refractive index as the resin. However, these composites disclosed in the literature have been said only to show an agreement in refractive index at a specific wavelength; no mention is made of the refractive indices on the shorter wavelength side. The wavelength dependency of refractive index of a resin generally differs from that of a filler. Thus, even if the refractive indices coincide with each other at the D line of sodium (589 nm), for instance, the refractive indices differ at 400 nm and the light transmissivity at this wavelength is low in many instances. For the composite to show good transparency, it is necessary that the refractive indices should coincide with each other in the wide wavelength range of 400 to 800 nm. The wavelength dependency of refractive index is indicated by the Abbe number and, therefore, if a filler having a refractive index Abbe number close to that of the resin can be selected, it might be considered possible to render the refractive indices in agreement in a wide wavelength range. JP Kokai 2001-261367 describes, by way of example, a glass fiber intended for use in combination with a transparent resin and having an Abbe number differing from that of the resin by not more than ±5. However, the glass filler dealt with in this document is a special one low in Abbe number and adapted for ordinary resins. Thus, a transparent composite in which a general-purpose glass filler is used and which shows high light transmissivity in a wide wavelength range is desired.

### DISCLOSURE OF THE INVENTION

The present invention, which has been made in view of such problems as mentioned above, has for its object to provide a composite composition excellent in transparency using a transparent resin having a given or higher Abbe number in combination with a glass filler having ordinary physical properties.

The present inventors made intensive investigations in an attempt to accomplish the above object and, as a result, found that a transparent composite composition which comprises a transparent resin (a) and a glass filler (b) and in which the transparent resin has an Abbe number of not smaller than 45 shows high light transmissivity in a wide wavelength range. The transparent composite composition of the invention is judiciously used in the form of transparent sheets, optical lenses, liquid crystal display element plastic substrates, color filter substrates, organic EL display element plastic substrates, solar cell substrates, touch panels, optical elements, optical waveguides, LED sealants, and the like.

Thus, the present invention provides a transparent composite composition which comprises a transparent resin (a) and a glass filler (b) and in which the transparent resin has an Abbe number of not smaller than 45.

The difference in refractive index between the transparent resin (a) and glass filler (b) in the transparent composite composition of the invention is preferably not greater than 0.01. Further, the transparent resin (a) in the transparent composite composition preferably comprises at least one resin species higher in refractive index than the glass filler (b) and at least one resin species lower in refractive index than the glass filler (b). Furthermore, the glass filler (b) in the transparent composite composition preferably has a refractive index of 1.45 to 1.55.

The transparent resin is preferably a crosslinked acrylate resin derived from a (meth)acrylate having two or more functional groups, in particular a (meth)acrylate having an alicyclic structure, as the main component, or a cured epoxy resin derived from an epoxy resin having two or more functional groups, such as an alicyclic epoxy resin or triglycidyl isocyanurate, as the main component.

### DETAILED DESCRIPTION OF THE INVENTION

In the following, the present invention is described in detail.

According to a characteristic feature of the invention, a transparent resin (a) having an Abbe number of not smaller than 45 is used, and a transparent resin having an Abbe number of not smaller than 50 is more preferred. The Abbe number (ν_{d}), so referred to herein, indicates the wavelength dependency of refractive index, namely the degree of dispersion, and can be calculated by the equation ν_{d} = (n_{D} - 1)/(n_{F} - n_{C}), where n_{C}, n_{D} and n_{F} are the refractive indices for the C line (wavelength: 656 nm), D line (589 nm) and F line (486 nm), respectively, in the Fraunhofer spectrum. The refractive index of a material having a small Abbe number varies greatly depending on the wavelength. Ordinary glass fillers have an Abbe number of not smaller than 50 and, therefore, when they are used in combination with a transparent resin having an Abbe number of not greater than 45 to produce composite compositions, great differences in refractive index will result at wavelengths not longer than 400 nm, for instance, hence the light transmissivity will become decreased at 400 nm and shorter wavelengths, even if the refractive indices of filler and resin coincide with each other at the wavelength of 589 nm. When a transparent resin having an Abbe number of not smaller than 45 is used, it is possible to cause the refractive index of the resin to coincide with that of an ordinary glass filler in a wide wavelength range and thus realize high levels of light transmissivity at 400 nm and shorter wavelengths, for instance.

As examples of the transparent resin having an Abbe number of not smaller than 45, there may be mentioned thermoplastic acrylic resins such as PMMA, crosslinked acrylate resins derived from a specific (meth)acrylate having two or more functional groups as the main component, epoxy resins resulting from crosslinking of a specific compound having two or more epoxy groups, cycloolefin resins resulting from polymerization of a norbornene derivative and/or a cyclohexadiene derivative, olefin-maleimide alternating copolymers, olefin resins such as poly-4-methylpentene-1, and CR-39 and like thermosetting resins for optical lenses, among others.

For maintaining good transparency, the difference in refractive index between the transparent resin (a) and glass filler (b) is preferably not greater than 0.01, more preferably not greater than 0.005. In cases where the difference in refractive index is greater than 0.01, the resulting transparent composite compositions will be inferior in transparency.

The difference in refractive index between the transparent resin (a) and glass filler (b) can be made not greater than 0.01, for example by (1) selecting a glass filler matching the refractive index of the transparent resin, (2) selecting a transparent resin matching the refractive index of the glass filler, or (3) combining a resin species higher in refractive index than the glass filler and a resin species lower in refractive index than the glass filler to thereby match the refractive index of the resulting transparent resin to that of the glass filler. Since, however, the number of combinations of a single resin and glass fillers matching in refractive index thereto is limited; the method (3) mentioned above is preferred. This method makes it easy to match the refractive index of the resin to the refractive indices of ordinary glass fillers such as E glass, S glass and NE glass fillers.

Thus, the use of a resin comprising at least one component higher in refractive index than the glass filler (b) and at least one component lower in refractive index than the glass filler (b) is preferred so that the difference in refractive index from the glass filler (b) may be made not greater than 0.01. When, for example, a glass filler made of S glass having a refractive index of about 1.53 is used, a resin component having a refractive index of not lower than 1.53 and a resin component having a refractive index exceeding 1.53 are preferably used in combination, and a preferred specific combination is the combination of an alicyclic structure-containing (meth)acrylate having a refractive index of not higher than 1.53 and a (meth)acrylate having a refractive index of not lower than 1.55. When a glass filler made of NE glass having a refractive index of about 1.51 is used, the combination of an alicyclic structure-containing (meth)acrylate having a refractive index exceeding 1.51 and a (meth)acrylate having a refractive index of not higher than 1.51 is preferred.

### (a) Transparent resin

The transparent resin (a) to be used in the practice of the invention preferably has a glass transition temperature of not lower than 150°C, more preferably not lower than 180°C, still more preferably not lower than 200°C. If a resin having a glass transition temperature lower than 150°C is used, deformation or warping will possibly occur in the process of TFT device formation when the process is applied to active matrix type display device substrates.

In a preferred mode of practice, the transparent resin (a) of the invention preferably comprises, as the main component, a crosslinked acrylate resin or a cured epoxy resin from the good heat and chemical resistance viewpoint. The crosslinked acrylate resin so referred to herein is the product of crosslinking of a (meth)acrylate having two or more functional groups by means of UV or heating, for instance. The cured epoxy resin so referred to herein is the product of curing of an epoxy resin having two or more functional groups.

### (i) (Meth)acrylate resin

Various (meth)acrylates can be used as the (meth)acrylate having two or more functional groups. From the viewpoint that the crosslinked acrylate has an Abbe number of not smaller than 45 and is excellent in heat resistance and transparency, it is preferred that a (meth)acrylate having an alicyclic structure be contained as a constituent.

The alicyclic structure-containing (meth)acrylate to be used in preparing the composite composition of the invention may be any of those (meth)acrylates containing an alicyclic structure and having two or more functional groups. Preferred from the reactivity, heat resistance and transparency viewpoint is at least one (meth)acrylate selected from among the (meth)acrylates of the formulas (1) and (2) given below: 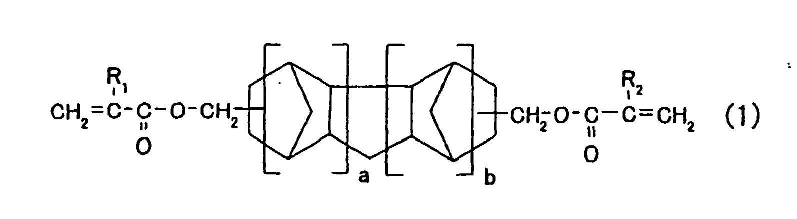 wherein R₁ and R₂ each independently represents a hydrogen atom or a methyl group, a represents 1 or 2 and b represents 0 or 1; 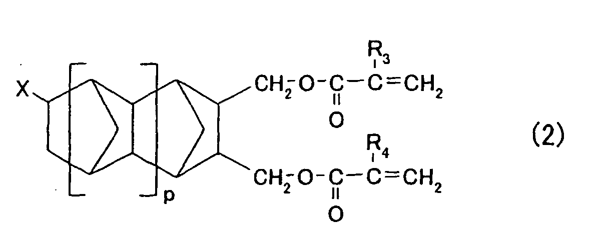 wherein X represents a hydrogen atom, -CH₃, -CH₂OH, NH₂, 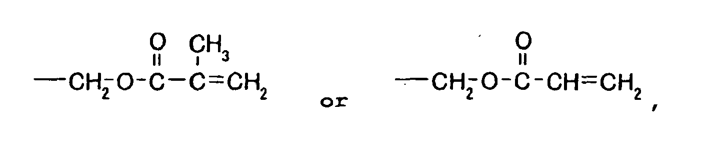 R₃ and R₄ each independently represents H or -CH₃ and p is 0 or 1.

Among the (meth)acrylates of formula (1), dicyclopentadienyl diacrylate having a structure such that R₁ and R₂ each is a hydrogen atom, a is 1 and b is 0 is particularly preferred from the viewpoint of physical properties such as viscosity.

Among the (meth)acrylates of formula (2), at least one acrylate selected from among perhydro-1,4:5,8-dimethanonaphthalene-2,3,7-(oxymethyl)triacrylate having a structure such that X is -CH₂OCOCH=CH₂, R₃ and R₄ each is a hydrogen atom and p is 1 and the acrylate having a structure such that X, R₃ and R₄ each is a hydrogen atom and p is 0 or 1 is particularly preferred. From the viscosity viewpoint, among others, norbornane dimethylol diacrylate having a structure such that X, R₃ and R₄ each is a hydrogen atom and p is 0 is most preferred. The (meth)acrylates of formula (2) can be obtained by the method disclosed in JP Kokai H05-70523.

### (1-a) High refractive index (meth)acrylate

Various sulfur- or aromatic ring-containing (meth)acrylates can be used as the (meth)acrylate having a refractive index of not lower than 1.55 and, in particular, sulfur-containing (meth)acrylates and fluorine skeleton-containing (meth)acrylates are preferred in view of the high refractive indices they can provide.

The sulfur-containing (meth)acrylate to be used in the practice of the invention may be any of sulfur-containing (meth)acrylates having two or more functional groups. From the heat resistance and transparency viewpoint, however, (meth)acrylates represented by the following formula (3) are preferred: 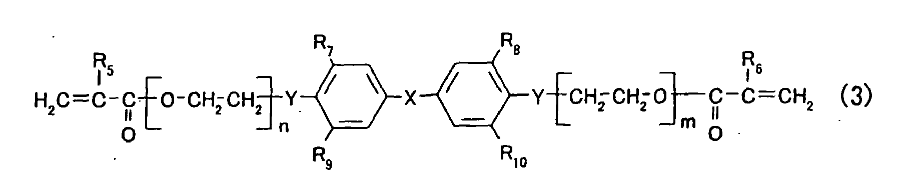 wherein X represents a sulfur atom or a SO₂ group, Y represents an oxygen or sulfur atom, R₅ to R₁₀ each independently represents a hydrogen atom or a methyl group, and n and m each is 0 to 2.

Among the (meth)acrylates of formula (3), bis[4-(acryloyloxyethoxy)phenyl] sulfide having a structure such that X is sulfur, Y is oxygen, R₅ to R₁₀ each is hydrogen and n and m each is 1 is most preferred from the reactivity, heat resistance and easy handling viewpoint.

The fluorene skeleton-containing (meth)acrylate to be used in the practice of the invention is not particularly restricted but may be any of those fluorene skeleton-containing (meth)acrylates which have two or more functional groups. From the heat resistance and transparency viewpoint, however, at least one (meth)acrylate selected from the (meth)acrylates represented by the formula (4) and (5) given below is preferred: 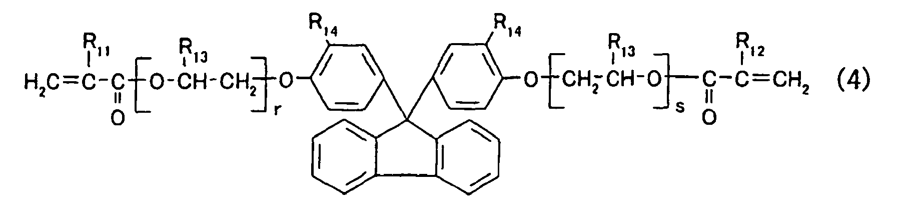 wherein R₁₁ to R₁₄ each independently represents a hydrogen atom or a methyl group and r and s each is 0 to 2; 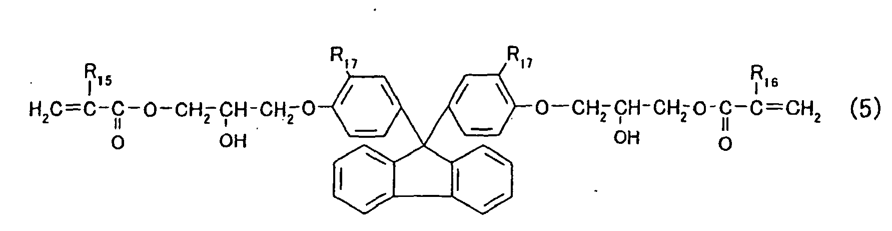 wherein R₁₅ to R₁₇ each independently represents a hydrogen atom or a methyl group.

Among these, bis[4-(acryloyloxyethoxy)phenyl]fluorene having a structure such that, in formula (4), R₁₁ to R₁₄ each is hydrogen and r and s each is 1 is most preferred.

### (i-b) Low refractive index (meth)acrylate

As the (meth)acrylate having a refractive index of not higher than 1.51, there may be mentioned hexanediol di(meth)acrylate, neopentyl glycol di(meth)acrylate, polyethylene glycol di(meth)acrylate, polypropylene glycol di(meth)acrylate, hydroxypivaldehyde-trimethylolpropane acetalization product di(meth)acrylate, hydrogenated bisphenol A-ethylene oxide adduct di(meth)acrylate, trimethylolpropane tri(meth)acrylate and so forth. Preferred from the high heat resistance viewpoint are cyclic ether type di(meth)acrylates such as the hydroxypivaldehyde-trimethylolpropane acetalization product di(meth)acrylate represented by the formula (6): 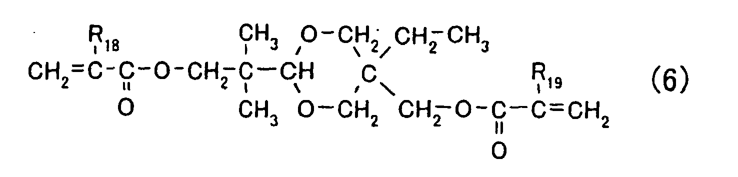 wherein R₁₈ and R₁₉ each represents H or CH₃.

In the (meth)acrylates having two or more functional groups which are to be used in the practice of the invention, there may be incorporated, for the purpose of providing flexibility, among others, a monofunctional (meth)acrylate in an amount which will not cause any extreme deterioration in the required characteristics. In this case, it is necessary to select the level of addition so as to match the refractive index of the resin component as a whole to the refractive index of the glass filler.

### [(Meth)acrylate crosslinking]

Available for crosslinking the above reactive monomer composition are the method comprising causing curing by means of actinic radiation, the method comprising causing thermal polymerization by heating, and so forth. These methods may be used in combination. When the reactive monomer composition comprises a (meth)acrylate monomer having two or more functional groups, preferably two or more such monomers differing in refractive index, the method comprising causing crosslinking by actinic radiation is preferred. For the purpose of driving the reaction to completion, lowering the retardation value and/or lowering the coefficient of linear expansion, for instance, it is preferred that the step of curing by means of actinic radiation and/or thermal polymerization by means of application of heat be followed by further high temperature heat treatment employed in combination. Ultraviolet light is preferred as the actinic radiation to be used. As the source of ultraviolet light, there may be mentioned, for example, metal halide lamps, high-pressure mercury lamps, and the like.

In crosslinking/curing the reactive monomer composition by actinic irradiation, for example by ultraviolet irradiation, a radical-generating photopolymerization initiator is preferably added to the resin composition. As such photopolymerization initiator, there may be mentioned, for example, benzophenone, benzoin methyl ether, benzoin propyl ether, diethoxyacetophenone, 1-hydroxycyclohexyl phenyl ketone, 2,6-dimethylbenzoyldiphenylphosphine oxide, 2,4,6-trimethylbenzoyldiphenylphosphine oxide, etc. Two or more of these photopolymerization initiators may be used combinedly.

The content of the photopolymerization initiator in the composite composition may be such that an adequate level of curing can be secured. It is preferably 0.01 to 2 parts by weight, more preferably 0.02 to 1 part by weight, most preferably 0.1 to 0.5 part by weight, per 100 parts by weight of the sum of the (meth)acrylates having two or more functional groups. When the level of addition of the photopolymerization initiator is excessive, the polymerization will progresses abruptly, causing such problems as increased birefringence, discoloration, and cracking upon curing. When it is too low, the composition cannot be cured to a sufficient extent and problems may arise, for example the composition after curing may remain sticking to the mold, making it difficult to release the same from the mold.

When high temperature heat treatment is carried out after crosslinking by actinic radiation curing and/or thermal polymerization, it is preferred that a step of 1 to 24 hours of heat treatment at 250-300°C in a nitrogen atmosphere or under vacuum be carried out additionally in the process of the heat treatment for the purpose of reducing the coefficient of linear expansion, for instance.

### (ii) Epoxy resin

The epoxy resin to be used in the practice of the invention is not particularly restricted but may be any of those epoxy resins which acquire an Abbe number of not smaller than 45 after curing. While the epoxy resin acquiring an Abbe number of not smaller than 45 after curing which is to be used may depend on the curing agent employed, alicyclic epoxy resins represented by the formulas (7) to (12) given below and triglycidyl isocyanurate represented by the formula (13) may be mentioned as preferred example to be used in combination with an acid anhydride type curing agent, for instance. Among them, the alicyclic epoxy resins of formula (10) and triglycidyl isocyanurate of formula (13) are more preferably used in view of the excellent heat resistance they can afford. 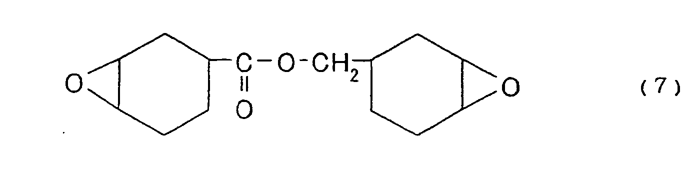 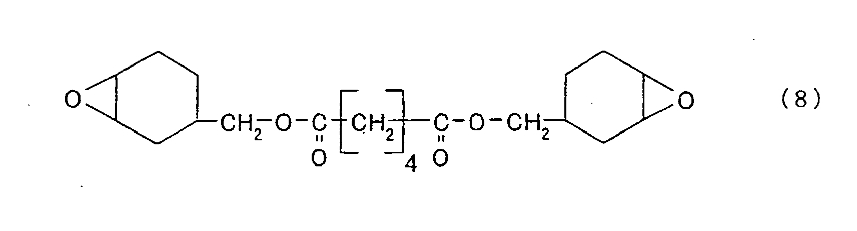 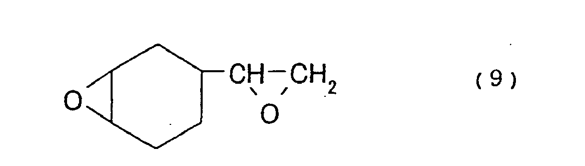 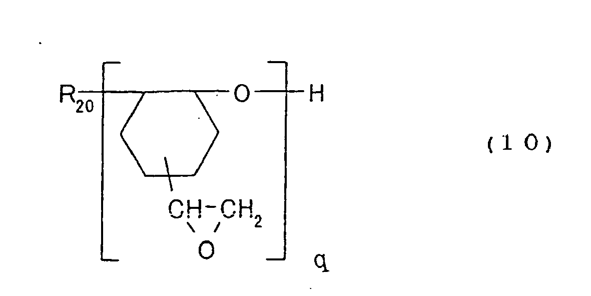 (In the general formula (10), R₂₀ represents an alkyl group or a trimethylolpropane residue and q is 1 to 20.) 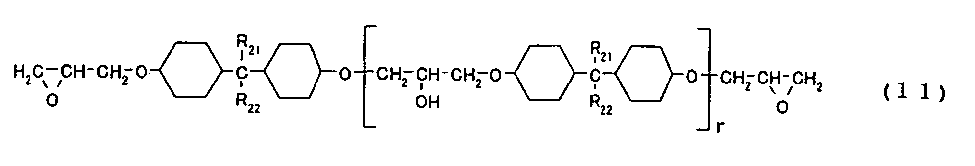 (Wherein R₂₁ and R₂₂ may be the same or different and each represents H or CH₃ and r is 0 to 2.) 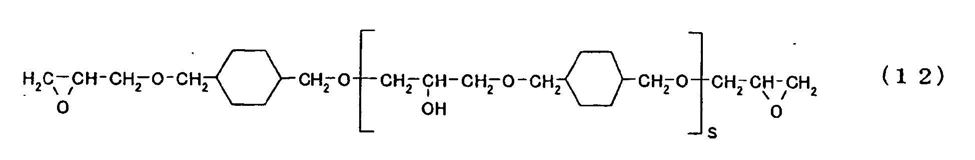 (Wherein s is 0 to 2.)

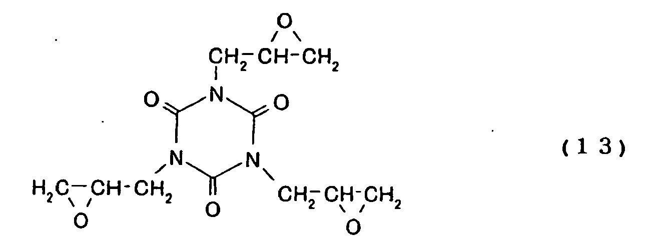

These epoxy reins may be used either singly or two or more of them may be used in combination provided that the refractive index of the resin or resin combination can become substantially equal to that of the glass filler. Another epoxy resin may also be used in combination for refractive index adjustment. Further, for the purpose of providing flexibility, for instance, a monofunctional epoxy compound may be added in an amount which will not extremely deteriorate the required characteristics.

In the practice of the invention, the epoxy resin (a) is cured by heating or actinic irradiation in the presence of a curing agent or a polymerization initiator. The curing agent to be used is not particularly restricted but it is only required that when it is subjected to curing with the epoxy resin used in combination, an Abbe number of not smaller than 45 can be obtained. Preferably, it is an acid anhydride type curing agent or a cationic catalyst because of the ease of obtaining curing products excellent in transparency.

The acid anhydride type curing agent includes, among others, phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, methylhexahydrophthalic anhydride, methyltetrahydrophthalic anhydride, hydrogenated methylnadic anhydride, hydrogenated nadic anhydride, and the like. Among these, methylhexahydrophthalic anhydride and hydrogenated methylnadic anhydride are preferred from the excellent transparency viewpoint.

In cases where such acid anhydride type curing agent is used, a curing promoter is preferably used. As the curing promoter, there may be mentioned, among others; tertiary amines such as 1,8-diazabicyclo[5.4.0]undecene-7 and triethylenediamine, imidazoles such as 2-ethyl-4-methylimidazole, phosphorus compounds such as triphenylphosphine and tetraphenylphosphonium tetraphenylborate, quaternary ammonium salts, organic metal salts, and derivatives of these. Among these, the phosphorus compounds and imidazole compounds such as 1-benzyl-2-phenylimidazole are preferred from the excellent transparency viewpoint. These curing promoters may be used singly or two or more of them may be used.in combination.

The acid anhydride type curing agent is preferably used in an amount such that the acid anhydride group in the acid anhydride type curing agent may amount to 0.5 to 1.5 equivalents, more preferably 0.7 to 1.2 equivalents, per equivalent of the epoxy group in the epoxy resin (a).

The cationic catalyst include, among others, organic acids such as acetic acid, benzoic acid, salicylic acid and paratoluenesulfonic acid, boron trifluoride-amine complexes, boron trifluoride ammonium salt, aromatic diazonium salts, aromatic sulfonium salts, aromatic iodonium salts, aluminum complex-containing cationic catalysts, and the like. Among them, aluminum complex-containing cationic catalysts are preferred.

### (b) Glass filler

The refractive index of the glass filler (b) to be used in the practice of the invention is not particularly restricted but is preferably within the range of 1.45 to 1.55, more preferably 1.50 to 1.54. When the refractive index of the glass filler is above 1.55, it is difficult to select a resin having the same refractive index and an Abbe number of not smaller than 45. Those glass fillers having a refractive index lower than 1.45 each has a special composition, hence the use thereof is disadvantageous from the cost viewpoint. Those glass fillers having a refractive index of 1.50 to 1.54 are ordinary glass fillers, and it is easy to select a resin having the same refractive index as that of one of them and having an Abbe number of not smaller than 45.

The glass filler (b) to be used in the practice of the invention includes glass fibers, glass cloths, nonwoven glass fabrics and other glass fiber cloths, glass beads, glass flakes, glass powders, milled glass species and so forth. Among them, glass fibers, glass cloths and nonwoven glass fabrics are preferred in view of their being highly effective in reducing the coefficient of linear expansion. Glass cloths are most preferred.

As for the glass species, there may be mentioned E glass, C glass, A glass, S glass, D glass, NE glass, T glass, quartz glass, etc. Among them, S glass, T glass and NE glass are preferred because of the ease of refractive index control with a resin having an Abbe number of not smaller than 45 and because of their ready availability.

The glass filler (b) is incorporated in an amount of 1 to 90% by weight, preferably 10 to 80% by weight, more preferably 30 to 70% by weight. When the glass filler content is less than 1% by weight, the linear expansion coefficient reducing effect of composite formation is no more observed, while a content exceeding 90% by weight makes it difficult to carry out the molding.

The closer the contact between the glass filler and resin in the composite composition of the invention is, the better the transparency of the composite composition is. Therefore, the glass filler surface is preferably treated with a surface modifier known in the art, for example a silane coupling agent. Specifically, treatment with an epoxy group-containing compound is preferred when the epoxy resin is used and, when the (meth)acrylate is used, treatment with an acrylsilane is preferred.

The composite composition of the invention may further contain, according to need, an antioxidant, an ultraviolet absorber, a dye or pigment, a loading material such as another inorganic filler, and/or a further additive, each in a small amount so that such characteristics as transparency, solvent resistance and heat resistance may not be impaired.

### [Composite composition production method]

The method of producing the composite composition includes, among others, but is not limited to, the method comprising directly mixing the resin and glass filler together and casting the mixture into an appropriate mold, followed by crosslinking, the method comprising dissolving the resin in a solvent and dispersing the glass filler in the solution, followed by casting and crosslinking, and the method comprising impregnating the glass cloth or nonwoven glass fabric with the resin, followed by crosslinking.

For use as transparent sheets, optical lenses, liquid crystal display panel plastic substrates, color filter substrates, organic EL display panel plastic substrates, solar cell substrates, touch panels, optical elements, optical waveguides, LED sealing materials, and the like, the transparent composite composition of the invention preferably has a mean linear expansion coefficient at 30-150°C of not more than 40 ppm, more preferably not more than 30 ppm, most preferably not more than 20 ppm. If the coefficient exceeds this upper limit, such problems as warping and aluminum wiring breaking may possible arise in the production process in which active matrix display device substrates are produced from the composite composition.

For use as transparent sheets, optical lenses, liquid crystal display panel plastic substrates, color filter substrates, organic EL display panel plastic substrates, solar cell substrates, touch panels, optical elements, optical waveguides, LED sealing materials, and the like, the transparent composite composition of the invention preferably has a light transmissivity at the wavelength 400 nm of not less than 80%, more preferably not less than 85%. When the transmissivity at the wavelength 400 nm is less than 80%, decreases in light utilization efficiency will result; this is unfavorable for those fields of application in which the light utilization efficiency is important.

When the composite composition of the invention is used as liquid crystal display panel plastic substrates, color filter substrates, organic EL display panel plastic substrates, solar cell substrates, touch panels, and the like, the substrate thickness is preferably 50 to 2,000 µm. When the substrate thickness is within this range, the substrates will be excellent in flatness and can achieve a weight reduction as compared with glass substrates.

### EXAMPLES

The following examples illustrate the substance of the present invention in more detail. However, the scope of the invention is not restricted in any way by the following examples unless the aims thereof are defeated.

### (Example 1)

A 100-µm-thick S glass-based glass cloth (product of Unitika Glass fiber (#2117 type); refractive index 1.530) was deprived of organic matter by burning and then treated with acryloyloxypropyltriethoxysilane (acrylsilane). This cloth was impregnated with a resin composition (refractive index after crosslinking: 1.533) composed of 92 parts by weight of dicyclopentadienyl diacrylate (M-203, product of Toagosei; refractive index after crosslinking: 1.527), 8 parts by weight of bis[4-(acryloyloxyethoxy)phenyl] sulfide (TO-2066, trial product of Toagosei; refractive index after crosslinking: 1.606) and 0.5 part by weight of 1-hydroxycyclohexyl phenyl ketone (Irgacure 184, product of Ciba Specialty Chemicals) as a photopolymerization initiator, followed by degassing. This resin-impregnated cloth was sandwiched between two releasing agent-treated glass sheets and irradiated, from both sides, with UV light at a dose of about 10 J/cm² for curing. It was further heated in a vacuum oven at 250°C for 3 hours to give a 0.1-mm-thick transparent sheet.

### (Example 2)

A 100-µm-thick S glass-based glass cloth (product of Unitika Glass fiber (#2117 type); refractive index 1.530) was deprived of organic matter by burning and then treated with acryloyloxypropyltriethoxysilane (acrylsilane). This cloth was impregnated with a resin composition (refractive index after crosslinking: 1.531) composed of 96 parts by weight of dicyclopentadienyl diacrylate (M-203, product of Toagosei; refractive index after crosslinking: 1.527), 4 parts by weight of bis[4-(acryloyloxyethoxy)phenyl]fluorene (TO-2065, trial product of Toagosei; refractive index after crosslinking: 1.624) and 0.5 part by weight of 1-hydroxycyclohexyl phenyl ketone (Irgacure 184, product of Ciba Specialty Chemicals) as a photopolymerization initiator, followed by degassing. This resin-impregnated cloth was sandwiched between two releasing agent-treated glass sheets and irradiated, from both sides, with UV light at a dose of about 10 J/cm² for curing. It was further heated in a vacuum oven at 250°C for 3 hours to give a 0.1-mm-thick transparent sheet.

### (Example 3)

A 100-µm-thick NE glass-based glass cloth (product of Nitto Boseki; refractive index 1.510) was deprived of organic matter by burning and then treated with acryloyloxypropyltriethoxysilane (acrylsilane). This cloth was impregnated with a resin composition (refractive index after crosslinking: 1.512) composed of 90 parts by weight of norbornanedimethylol diacrylate (TO-2111, trial product of Toagosei; refractive index after crosslinking: 1.520), 10 parts by weight of hydroxypivalaldehyde-trimethylolpropane acetalization product diacrylate (Kayarad R-604, product of Nippon Kayaku; refractive index after crosslinking: 1.496) and 0.5 part by weight of 1-hydroxycyclohexyl phenyl ketone (Irgacure 184, product of Ciba Specialty Chemicals) as a photopolymerization initiator, followed by degassing. This resin-impregnated cloth was sandwiched between two releasing agent-treated glass sheets and irradiated, from both sides, with UV light at a dose of about 10 J/cm² for curing. It was further heated in a vacuum oven at 250°C for 3 hours to give a 0.1-mm-thick transparent sheet.

### (Example 4)

Two 50-µm-thick NE glass-based glass cloth sheets (product of Nitto Boseki; refractive index 1.510) were deprived of organic matter by burning and then treated with γ-glycidoxypropyltrimethoxysilane (epoxysilane). These cloth sheets were impregnated with a resin composition prepared by melt-blending, at 110°C, 100 parts by weight of triglycidyl isocyanurate (TEPIC, product of Nissan Chemical Industries), 147 parts by weight of methylhexahydrophthalic anhydride (Rikacid MH-700, product of New Japan Chemical) and 2 parts by weight of tetraphenylphosphonium bromide (TPP-PB, product of Hokko Chemical Industry), and the impregnated sheets were degassed. One of the two resin-impregnated cloth sheets was laid on top of the other, and the resulting laminate was sandwiched between two releasing agent-treated glass sheets and heated, in an oven, at 100°C for 2 hours, at 120°C for 2 hours, at 150°C for 2 hours and then at 175°C for 2 hours to give a 0.1-mm-thick transparent sheet.

### (Example 5)

Two NE glass-based glass cloth sheets treated in the same manner as in Example 4 were impregnated with a resin composition prepared by melt-blending, at 100°C, 80 parts by weight of an alicyclic epoxy resin represented by the formula (10) given hereinabove (EHPE 3150, product of Daicel Chemical Industries), 20 parts by weight of a bisphenol S-based epoxy resin (Epiclon EXA 1514, product of Dainippon Ink and Chemicals), 77 parts by weight of methylhexahydrophthalic anhydride (Rikacid MH-700, product of New Japan Chemical) and 1 part by weight of 1-benzyl-2-phenylimidazole (1B2PZ), and the impregnated sheets were degassed. One of the two resin-impregnated cloth sheets was laid on top of the other, and the resulting laminate was sandwiched between two releasing agent-treated glass sheets and heated, in an oven, at 100°C for 2 hours, at 120°C for 2 hours, at 150°C for 2 hours and then at 200°C for 2 hours to give a 0.1-mm-thick transparent sheet.

### (Example 6)

A 100-µm-thick S glass-based glass cloth (product of Unitika Glass fiber (#2117 type); refractive index 1.530) was deprived of organic matter by burning and then treated with γ-glycidoxypropyltrimethoxysilane (epoxysilane). This cloth was impregnated with a resin composition prepared by melt-blending, at 110°C, 90 parts by weight of triglycidyl isocyanurate (TEPIC, product of Nissan Chemical Industries), 10 parts by weight of a bisphenol S-based epoxy resin (Epiclon EXA 1514, product of Dainippon Ink and Chemicals), 153 parts by weight of hydrogenated methylnadic anhydride (Rikacid HNA-100, product of New Japan Chemical) and 2 parts by weight of tetraphenylphosphonium bromide (TPP-PB, product of Hokko Chemical Industry), and the impregnated cloth was degassed. This resin-impregnated cloth was sandwiched between two releasing agent-treated glass sheets and heated, in an oven, at 100°C for 2 hours, at 120°C for 2 hours, at 150°C for 2 hours and then at 175°C for 2 hours to give a 0.1-mm-thick transparent sheet.

### (Example 7)

Two NE glass-based glass cloth sheets treated in the same manner as in Example 4 were impregnated with a resin composition prepared by melt-blending, at 100°C, 80 parts by weight of an alicyclic epoxy resin represented by the formula (7) given hereinabove (Celloxide 2021 P, product of Daicel Chemical Industries), 20 parts by weight of a caprolactone chain-containing alicyclic epoxy resin (Celloxide 2083, product of Daicel Chemical Industries) and 2 parts by weight of a cation type curing catalyst (Daicat EX-1, agent A/agent B = 1/3; product of Daicel Chemical Industries), and the impregnated sheets were degassed. One of the two resin-impregnated cloth sheets was laid on top of the other, and the resulting laminate was sandwiched between two releasing agent-treated glass sheets and heated, in an oven, at 100°C for 2 hours, at 150°C for 2 hours and then at 230°C for 2 hours to give a 0.1-mm-thick transparent sheet.

### (Example 8)

An NE glass powder with an average particle diameter of 3.2 µm (product of Nitto Boseki; refractive index: 1.510) was deprived of organic matter by burning and then treated with acryloyloxypropyltriethoxysilane (acrylsilane). This glass powder (100 parts by weight) was dispersed in a resin composition (refractive index after crosslinking: 1.512) composed of 90 parts by weight of norbornanedimethylol diacrylate (TO-2111, product of Toagosei; refractive index after crosslinking: 1.520), 10 parts by weight of hydroxypivalaldehyde-trimethylolpropane acetalization product diacrylate (Kayarad R-604, product of Nippon Kayaku; refractive index after crosslinking: 1.496) and 0.5 part by weight of 1-hydroxycyclohexyl phenyl ketone (Irgacure 184, product of Ciba Specialty Chemicals) as a photopolymerization initiator, followed by degassing. This was sandwiched between two glass sheets with an 80-µm-thick aluminum foil as a spacer and irradiated, from both sides, with UV light at a dose of about 10 J/cm² for curing. It was further heated in a vacuum oven at 250°C for 3 hours to give a 0.1-mm-thick transparent sheet.

### (Example 9)

A T glass powder with an average particle diameter of 3.1 µm (product of Nitto Boseki; refractive index: 1.530) was deprived of organic matter by burning and then treated with acryloyloxypropyltriethoxysilane (acrylsilane). This glass powder (100 parts by weight) was dispersed in a resin composition (refractive index after crosslinking: 1.532) composed of 96 parts by weight of dicyclopentadienyl diacrylate (M-203, product of Toagosei; refractive index after crosslinking: 1.527), 4 parts by weight of bis[4-(acryloyloxyethoxy)phenyl]fluorene (TO-2065, trial product of Toagosei; refractive index after crosslinking: 1.624) and 0.5 part by weight of 1-hydroxycyclohexyl phenyl ketone (Irgacure 184, product of Ciba Specialty Chemicals) as a photopolymerization initiator, followed by degassing. This was sandwiched between two glass sheets with an 80-µm-thick aluminum foil as a spacer and irradiated, from both sides, with UV light at a dose of about 10 J/cm² for curing. It was further heated in a vacuum oven at 250°C for 3 hours to give a 0.1-mm-thick transparent sheet.

### (Comparative Example 1)

A 100-µm-thick E alass-based glass cloth (E10A (#2117), product of Unitika Glass fiber; refractive index 1.560) was deprived of organic matter by burning and then treated with acryloyloxypropyltriethoxysilane (acrylsilane). This cloth was impregnated with a resin composition (refractive index after crosslinking: 1.560) composed of 58 parts by weight of dicyclopentadienyl diacrylate (M-203, product of Toagosei; refractive index after crosslinking: 1.527), 42 parts by weight of bis[4-(acryloyloxyethoxy)phenyl] sulfide (TO-2066, trial product of Toagosei; refractive index after crosslinking: 1.606) and 0.5 part by weight of 1-hydroxycyclohexyl phenyl ketone (Irgacure 184, product of Ciba Specialty Chemicals) as a photopolymerization initiator, followed by degassing. This resin-impregnated cloth was sandwiched between two releasing agent-treated glass sheets and irradiated, from both sides, with UV light at a dose of about 500 mJ/cm² for curing. It was further heated in a vacuum oven at about 100°C for 3 hours and, further, at about 250°C for 3 hours to give a 0.1-mm-thick transparent sheet.

### (Comparative Example 2)

A 100-µm-thick E glass-based glass cloth (product of Unitika Glass fiber (#2117 type); refractive index 1.560) was deprived of organic matter by burning and then treated with γ-glycidoxypropyltrimethoxysilane (epoxysilane). This cloth was impregnated with a resin composition prepared by melt-blending, at 100°C, 20 parts by weight of triglycidyl isocyanurate (TEPIC, product of Nissan Chemical Industries), 80 parts by weight of a bisphenol S-based epoxy resin (Epiclon EXA 1514, product of Dainippon Ink and Chemicals), 75 parts by weight of hydrogenated methylnadic anhydride (Rikacid HNA-100, product of New Japan Chemical) and 1 part by weight of tetraphenylphosphonium bromide (TPP-PB, product of Hokko Chemical Industry), and the impregnated cloth was degassed. This resin-impregnated cloth was sandwiched between two releasing agent-treated glass sheets and heated, in an oven, at 100°C for 2 hours, at 120°C for 2 hours, at 150°C for 2 hours and then at 175°C for 2 hours to give a 0.1-mm-thick transparent sheet.

The optical sheets produced in the above manner were measured for various characteristics by the evaluation methods described below.

### a) Average linear expansion coefficient

The coefficient was determined by carrying out measurements in a nitrogen atmosphere using a Seiko Instruments model TMA/SS 120C thermal stress strain measuring apparatus. The temperature was raised from 30°C to 400°C at a rate of 5°C per minute, followed by 20 minutes of maintenance, and value measurements were made in the temperature range of 30°C to 150°C. The measurements were carried out in the tensile mode under a load of 5 g.

For the measurements, originally designed quartz-made tension chucks (material: quartz; linear expansion coefficient: 0.5 ppm) were used. Those Inconel chucks that are in common use have problems, namely they are themselves high in linear expansion coefficient and unsatisfactory with respect to the mode of supporting samples and, thus, when they are applied to sheets having a thickness exceeding 100 µm, greater linear expansion coefficient values are obtained as compared with the results of measurements in the compression mode and/or the variation becomes greater. Therefore, the quartz-made tension chucks were originally designed and used in the linear expansion coefficient measurements. It has been confirmed that when these tension chucks are used, almost the same values can be measured as in the compression mode.

### b) Heat resistance (Tg)

Measurements were made using a Seiko Instruments model DMS-210 viscoelasticity measuring apparatus, and the maximum tanδ value at 1 Hz was recorded as the glass transition temperature (Tg).

### c) Light transmissivity

Light transmissivity measurements were made at 400 nm and 550 nm using a model U 3200 spectrophotometer (product of Hitachi).

### d) Refractive index, Abbe number

Refractive index measurements at the wavelength 589 nm were made at 25°C using an Atago model DR-M2 Abbe refractometer. Refractive index measurements were also made at the wavelengths 656 nm and 486 nm, and Abbe numbers were calculated.

The evaluation results are shown in Table 1.

**[Table 1]**

| | Example | | | Comparative Example 1 |
|---|---|---|---|---|
| | 1 | 2 | 3 | |
| Alicyclic acrylate (1) | 92 | 96 | - | 58 |
| Alicyclic acrylate (2) | - | - | 90 | - |
| Sulfur-containing acrylate | 8 | - | - | 42 |
| Fluorene acrylate | - | 4 | - | - |
| Low refractive index acrylate | - | - | 10 | - |
| Photopolymerization initiator | 0.5 | 0.5 | 0.5 | 0.5 |
| S glass-based glass cloth | 100 µm × 1 sheet | 100 µm × 1 sheet | - | - |
| NE glass-based glass cloth | - | - | 100 µm × 1 sheet | - |
| E glass-based glass cloth | - | - | - | 100 µm × 1 sheet |
| Resin refractive index | 1.533 | 1.531 | 1.512 | 1.560 |
| Resin refractive index Abbe number | 51 | 52 | 56 | 37 |
| Glass cloth refractive index | 1.530 | 1.530 | 1.510 | 1.560 |
| Substrate thickness (µm) | 100 | 100 | 100 | 100 |
| Mean linear expansion coefficient (ppm) | 11 | 10 | 13 | 16 |
| Heat resistance : Tg (°C) | >250 | >250 | >250 | 210 |
| Light transimissivity at 400 nm (%) | 85 | 88 | 88 | 70 |
| Light transimissivity at 550 nm (%) | 89 | 89 | 89 | 89 |

**[Table 2]**

| | Example | | | | Comparative Example 2 |
|---|---|---|---|---|---|
| | 4 | 5 | 6 | 7 | |
| Isocyanurate type epoxy resin | 100 | - | 90 | - | 20 |
| Alicyclic epoxy resin (EHPE) | - | 80 | - | - | - |
| Alicyclic epoxy resin (2021P) | - | - | - | 80 | - |
| Alicyclic epoxy resin (2083) | - | - | - | 20 | - |
| Bisphenol S-based EP | - | 20 | 10 | - | 80 |
| Acid anhydride (HNA-100) | - | - | 153 | - | 75 |
| Acid anhydride (MN-700) | 147 | 77 | - | - | - |
| Curing promoter (TPP-PB) | 2 | - | 2 | - | 1 |
| Curing promoter (1B2PZ) | - | 1 | - | - | - |
| Cationic curing catalyst | - | - | - | 2 | - |
| NE glass-based glass cloth | 50 µm × 2 sheets | 50 µm × 2 sheets | - | 50 µm × 2 sheets | - |
| S glass-based glass cloth | - | - | 100 µm × 1 sheet | - | -- |
| E glass-based glass cloth | - | - | - | - | 100 µm × 1 sheet |
| Resin refractive index | 1.513 | 1.512 | 1.529 | 1.514 | 1.561 |
| Resin refractive index Abbe number | 52 | 48 | 50 | 53 | 36 |
| Glass cloth refractive index | 1.510 | 1.510 | 1.530 | 1.510 | 1.560 |
| Substrate thickness (µm) | 100 | 100 | 100 | 100 | 100 |
| Mean linear expansion coefficient (ppm) | 15 | 15 | 12 | 15 | 16 |
| Heat resistance : Tg (°C) | 256 | 235 | 283 | 201 | 221 |
| Light transimissivity at 400 nm (%) | 89 | 84 | 87 | 86 | 65 |
| Light transimissivity at 550 nm (%) | 91 | 89 | 89 | 89 | 88 |

**[Table 3]**

| | Example | |
|---|---|---|
| | 8 | 9 |
| Alicyclic acrylate (1) | - | 96 |
| Alicyclic acrylate (2) | 90 | - |
| Fluorene acrylate | - | 4 |
| Low refractive index acrylate | 10 | - |
| Photopolymerization initiator | 0.5 | 0.5 |
| S glass-based glass powder | - | 100 |
| NE glass-based glass powder | 100 | - |
| Resin refractive index | 1.512 | 1.531 |
| Resin refractive index Abbe number | 56 | 52 |
| Glass cloth refractive index | 1.510 | 1.530 |
| Substrate thickness (µm) | 110 | 110 |
| Mean linear expansion coefficient (ppm) | 35 | 33 |
| Heat resistance: Tg (°C) | >250 | >250 |
| Light transimissivity at 400 nm (%) | 85 | 84 |
| Light transimissivity at 550 nm (%) | 88 | 88 |

### INDUSTRIAL APPLICABILITY

As described hereinabove, the transparent composite composition of the invention shows high light transmissivity within a wide wavelength range even when a general-purpose glass-made filler is used. Thus, it can adequately be used, for example, in producing transparent sheets, optical lenses, liquid crystal display panel plastic substrates, color filter substrates, organic EL display panel plastic substrates, solar cell substrates, touch panels, optical elements, optical waveguides, LED sealing materials, and so forth.

## Claims

1. A transparent composite composition which is in the form of a sheet-like molding with a thickness of 50 to 2,000 µm, and comprises a transparent resin (a) and a glass cloth as a glass filler (b), said transparent resin (a) having an Abbe number of not lower than 45, wherein Abbe numbers are calculated from refractive index measurements at the wavelengths 656 nm and 486 nm.

2. The transparent composite composition according to Claim 1, wherein the difference in refractive index between said transparent resin (a) and said glass filler (b) is not greater than 0.01.

3. The transparent composite composition according to Claim 1 or 2, wherein said transparent resin (a) is composed of at least one species higher in refractive index than said glass filler (b) and at least one species lower in refractive index than said glass filler (b).

4. The transparent composite composition according to Claim 1 or 2, wherein said glass filler (b) has a refractive index of 1.45 to 1.55.

5. The transparent composite composition according to Claim 1 or 2, wherein said transparent resin (a) has a glass transition temperature of not lower than 150°C.

6. The transparent composite composition according to Claim 1 or 2, wherein said transparent resin (a) is a crosslinked acrylate resin comprising an at least bifunctional (meth)acrylate as the main component thereof.

7. The transparent composite composition according to Claim 6, wherein said crosslinked acrylate resin comprises an alicyclic structure-containing (meth)acrylate as a constituent thereof.

8. The transparent composite composition according to Claim 7, wherein said alicylic structure-containing (meth)acrylate comprises at least one (meth)acrylate selected from (meth)acrylates of the general formula (1) and (2): 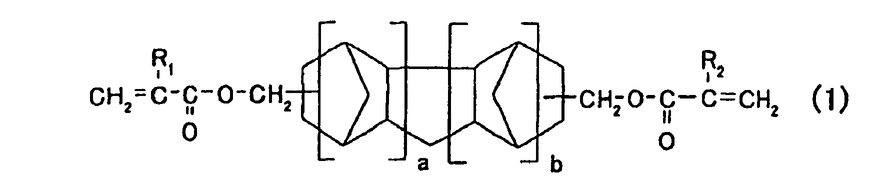 wherein, in formula (1), R₁ and R₂ may be the same or different and each is a hydrogen atom or a methyl group, a represents 1 or 2 and b represents 0 or 1; 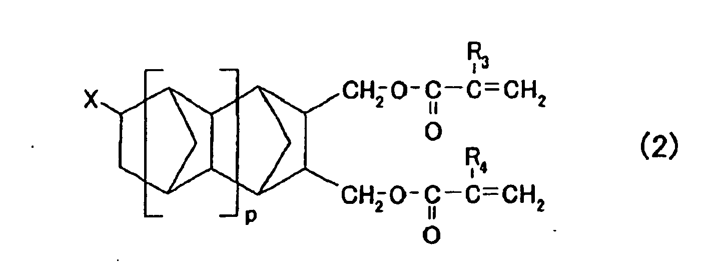 wherein, in formula (2), X is H, -CH₃, -CH₂OH, NH₂, 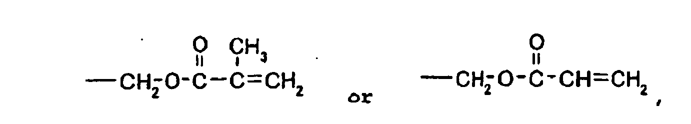 R₃ and R₄ each is H or -CH₃ and p is 0 or 1.

9. The transparent composite composition according to Claim 1 or 2, wherein said transparent resin (a) is a cured epoxy resin comprising an at least bifunctional epoxy resin as the main component thereof.

10. The transparent composite composition according to Claim 9, wherein said epoxy resin comprises triglycidyl isocyanurate as a constituent thereof.

11. The transparent composite composition according to Claim 9, wherein said epoxy resin comprises an alicyclic epoxy resin as a constituent thereof.

12. The transparent composite composition according to Claim 9, wherein said epoxy resin is a crosslinked product as cured with an acid anhydride type curing agent.

13. The transparent composite composition according to Claim 9, wherein said epoxy resin is a crosslinked product as cured with a cation type curing agent.

14. The transparent composite composition according to Claim 1 which shows a mean linear expansion coefficient at 30-150° C of not higher than 40 ppm.

15. The transparent composite composition according to Claim 1 which shows a light transmissivity at the wavelength 400 nm of not lower than 80%.

16. The transparent composite composition according to Claim 1 which occurs as a display panel plastic substrate or an active matrix display panel substrate.

## Patentansprüche

1. Transparente Kompositzusammensetzung, die in der Form eines folienartigen Formteils mit einer Dicke von 50 bis 2000 µm vorliegt und ein transparentes Harz (a) und ein Glasgewebe als einen Glasfüllstoff (b) umfasst, wobei das transparente Harz (a) eine Abbesche Zahl von nicht weniger als 45 aufweist, wobei Abbesche Zahlen aus Brechungsindexmessungen bei den Wellenlängen 656 nm und 486 nm berechnet werden.

2. Transparente Kompositzusammensetzung gemäß Anspruch 1, wobei der Brechungsindexunterschied zwischen dem transparenten Harz (a) und dem Glasfüllstoff (b) nicht mehr als 0,01 beträgt.

3. Transparente Kompositzusammensetzung gemäß Anspruch 1 oder 2, wobei das transparente Harz (a) aus mindestens einer Spezies, die einen höheren Brechungsindex als der Glasfüllstoff (b) aufweist, und mindestens einer Spezies, die einen Brechungsindex kleiner als der Glasfüllstoff (b) aufweist, zusammengesetzt ist.

4. Transparente Kompositzusammensetzung gemäß Anspruch 1 oder 2, wobei der Glasfüllstoff (b) einen Brechungsindex von 1,45 bis 1,55 aufweist.

5. Transparente Kompositzusammensetzung gemäß Anspruch 1 oder 2, wobei das transparente Harz (a) eine Glasübergangstemperatur von nicht weniger als 150°C aufweist.

6. Transparente Kompositzusammensetzung gemäß Anspruch 1 oder 2, wobei das transparente Harz (a) ein vernetztes Acrylatharz ist, das ein mindestens bifunktionelles (Meth)acrylat als die Hauptkomponente davon umfasst.

7. Transparente Kompositzusammensetzung gemäß Anspruch 6, wobei das vernetzte Acrylatharz ein (Meth)acrylat, das eine alicyclische Struktur enthält, als einen Bestandteil davon umfasst.

8. Transparente Kompositzusammensetzung gemäß Anspruch 7, wobei das (Meth)acrylat, das eine alicyclische Struktur enthält, mindestens ein (Meth)acrylat umfasst, ausgewählt aus (Meth)acrylaten der allgemeinen Formeln (1) und (2): 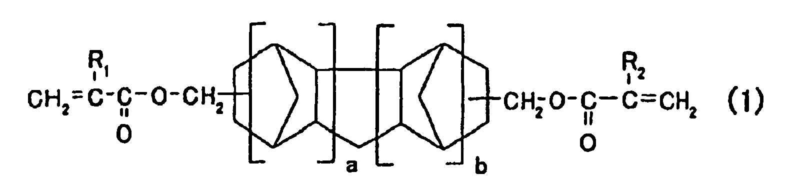 worin in der Formel (1) R₁ und R₂ gleich oder unterschiedlich sein können und jeweils ein Wasserstoffatom oder eine Methylgruppe sind, a den Wert 1 oder 2 aufweist und b den Wert 0 oder 1 aufweist, 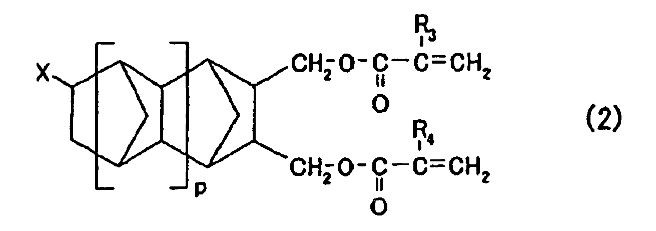 worin in der Formel (2) X ein H-Atom, eine -CH₃-, -CH₂OH-, NH₂-Gruppe, 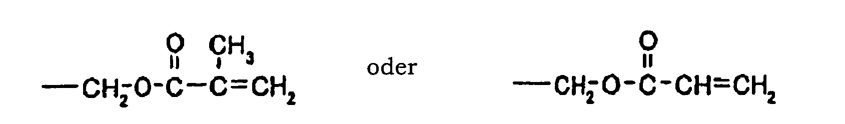 ist, R₃ und R₄ jeweils ein H-Atom oder eine -CH₃-Gruppe sind und p den Wert 0 oder 1 aufweist.

9. Transparente Kompositzusammensetzung gemäß Anspruch 1 oder 2, wobei das transparente Harz (a) ein ausgehärtetes Epoxyharz ist, das ein mindestens bifunktionelles Epoxyharz als die Hauptkomponente davon umfasst.

10. Transparente Kompositzusammensetzung gemäß Anspruch 9, wobei das Epoxyharz Triglycidylisocyanurat als einen Bestandteil davon umfasst.

11. Transparente Kompositzusammensetzung gemäß Anspruch 9, wobei das Epoxyharz ein alicyclisches Epoxyharz als einen Bestandteil davon umfasst.

12. Transparente Kompositzusammensetzung gemäß Anspruch 9, wobei das Epoxyharz ein vernetztes wie mit einem säureanhydridartigen Aushärtungsmittel ausgehärtetes Produkt ist.

13. Transparente Kompositzusammensetzung gemäß Anspruch 9, wobei das Epoxyharz ein vernetztes wie mit einem kationenartigen Aushärtungsmittel ausgehärtetes Produkt ist.

14. Transparente Kompositzusammensetzung gemäß Anspruch 1, die einen mittleren Längenausdehnungskoeffizienten bei 30-150°C von nicht mehr als 40 ppm zeigt.

15. Transparente Kompositzusammensetzung gemäß Anspruch 1, die eine Lichtdurchlässigkeit bei der Wellenlänge von 400 nm von nicht weniger als 80% zeigt.

16. Transparente Kompositzusammensetzung gemäß Anspruch 1, die als ein Anzeigefeld-Plastik-Substrat oder ein aktive Matrix-Anzeigefeld-Substrat auftritt.

## Revendications

1. Composition composite transparente qui est dans la forme d'un moulage semblable à une feuille avec une épaisseur de 50 à 2 000 µm et qui comprend une résine transparente (a) et un tissu de verre textile comme une charge de verre (b), ladite résine transparente
(a) présentant un nombre Abbe d'au moins 45, où les nombres Abbe sont calculés à partir des mesures d'indices de réfraction aux longueurs d'onde de 656 nm et 486 nm.

2. Composition composite transparente selon la revendication 1, dans laquelle la différence d'indice de réfraction entre ladite résine transparente (a) et ladite charge de verre (b) n'est pas supérieures à 0,01.

3. Composition composite transparente selon la revendication 1 ou 2, dans laquelle ladite résine transparente (a) est constituée d'au moins une espèce d'indice de réfraction supérieur à celui de ladite charge de verre (b) et d'au moins une espèce d'indice de réfraction inférieur à celui de ladite charge de verre (b).

4. Composition composite transparente selon la revendication 1 ou 2, dans laquelle ladite charge de verre (b) présente un indice de réfraction de 1,45 à 1,55.

5. Composition composite transparente selon la revendication 1 ou 2, dans laquelle ladite résine transparente (a) présente une température de transition vitreuse d'au moins 150°C.

6. Composition composite transparente selon la revendication 1 ou 2, dans laquelle ladite résine transparente (a) est une résine d'acrylate réticulé comprenant au moins un (méth)acrylate bifonctionnel comme son constituant principal.

7. Composition composite transparente selon la revendication 6, dans laquelle ladite résine d'acrylate réticulé comprend un (méth)acrylate contenant une structure alicyclique comme un constituant de celle-ci.

8. Composition composite transparente selon la revendication 7, dans laquelle ledit (méth)acrylate contenant une structure alicyclique comprend au moins un (méth)acrylate choisi parmi des (méth)acrylates de la formule générale (1) et (2) : 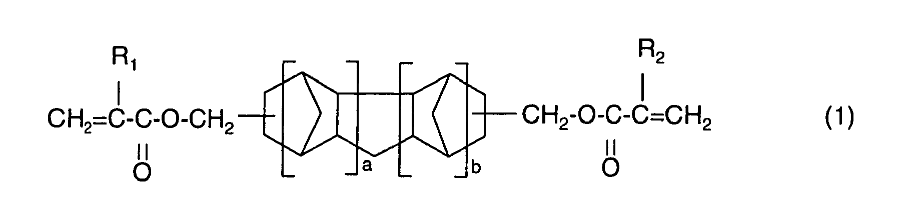 dans laquelle, dans la formule (1), R₁ et R₂ peuvent être identiques ou différents et représente chacun un atome d'hydrogène ou un groupe méthyle, a représente 1 ou 2 et b représente 0 ou 1 ; 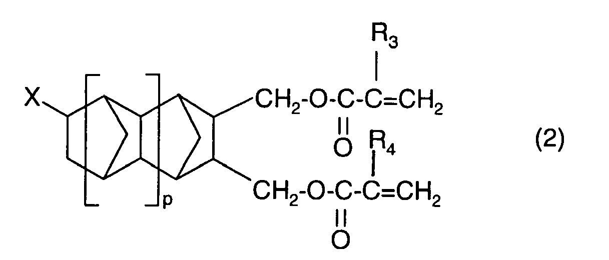 dans laquelle, dans la formule (2), X est H, -CH₃, -CH₂OH, NH₂, 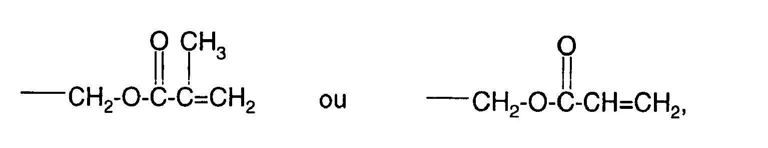 R₃ et R₄ représentent chacun H ou -CH₃ et p est égal à 0 ou à 1.

9. Composition composite transparente selon la revendication 1 ou 2, dans laquelle ladite résine transparente (a) est une résine époxy durcie comprenant au moins une résine époxy bifonctionnelle comme son constituant principal.

10. Composition composite transparente selon la revendication 9, dans laquelle ladite résine époxy comprend de l'isocyanurate de triglycidyle comme un constituant de celle-ci.

11. Composition composite transparente selon la revendication 9, dans laquelle ladite résine époxy comprend une résine époxy alicyclique comme un constituant de celle-ci.

12. Composition composite transparente selon la revendication 9, dans laquelle ladite résine époxy est un produit réticulé comme durci avec un agent durcissant de type anhydride d'acide.

13. Composition composite transparente selon la revendication 9, dans laquelle ladite résine époxy est un produit réticulé comme durci avec un agent durcissant de type cation.

14. Composition composite transparente selon la revendication 1 qui présente un coefficient de dilatation linéaire moyen à 30-150°C d'au plus 40 ppm.

15. Composition composite transparente selon la revendication 1 qui présente un coefficient de transmission de lumière à la longueur d'onde de 400 nm d'au moins 80 %.

16. Composition composite transparente selon la revendication 1 qui apparaît comme un substrat en matière plastique de panneau d'affichage ou comme un substrat de panneau d'affichage à matrice active.
